**Europäisches Patentamt**

**European Patent Office**

**Office européen des brevets**

(11) Numéro de publication: **0 419 306 B1**

(12) **FASCICULE DE BREVET EUROPEEN**

(45) Date de publication de fascicule du brevet: **01.03.95** (51) Int. Cl.⁶: **E05B 49/00**, H04L 9/32, G07F 7/10

(21) Numéro de dépôt: **90402378.5**

(22) Date de dépôt: **28.08.90**

---

(54) **Procédé et dispositif de génération et de validation d'un message numérique et application d'un tel dispositif.**

---

(30) Priorité: **20.09.89 FR 8912348**

(43) Date de publication de la demande:
**27.03.91 Bulletin 91/13**

(45) Mention de la délivrance du brevet:
**01.03.95 Bulletin 95/09**

(84) Etats contractants désignés:
**DE ES GB IT SE**

(56) Documents cités:
**EP-A- 0 234 100**
**EP-A- 0 311 112**
**FR-A- 2 607 544**
**US-A- 4 320 387**

(73) Titulaire: **ROCKWELL BODY AND CHASSIS SYSTEMS - FRANCE, en abrégé: ROCKWELL BCS - FRANCE**
**Tour Gan - Cédex 13**
**F-92082 Paris La Défense 2 (FR)**

(72) Inventeur: **Periou, Pierre,**
**15 Les Boccages Bruns**
**F-95000 Cergy Pontoise (FR)**

(74) Mandataire: **Obolensky, Michel et al**
**c/o CABINET LAVOIX**
**2, place d'Estienne d'Orves**
**F-75441 Paris Cédex 09 (FR)**

---

Rank Xerox (UK) Business Services
(3.10/3.09/3.3.3)

**Description**

La présente invention concerne un procédé et un dispositif de génération et de validation d'un message numérique d'identification d'au moins une station d'émission de ce message vers une station de réception de celui-ci et une application de ce dispositif.

On connait déjà dans l'état de la technique de nombreux systèmes radiants de commande à distance par exemple à haute fréquence ou à infrarouge, qui émettent un mot de passe adapté pour être reçu et reconnu par un récepteur approprié (voir par exemple les documents EP-A-0 311 112 et FR-A-2 607 544).

Ces systèmes sont par exemple utilisés pour assurer le verrouillage ou le déverrouillage d'une porte par exemple de garage, de maison ou de véhicule automobile.

Cependant, tous les systèmes connus apportent plus de confort que de sécurité et présentent au moins l'un des inconvénients majeurs que sont la copie et la reproduction du message ou la violabilité par exploration systématique ("scanning") que l'on ne peut éviter que par un blocage momentané du système.

Il existe en effet dans l'état de la technique deux grands types de systèmes, les uns utilisant des codes fixes et les autres, des codes mobiles.

Les codes fixes de même que les codes mobiles, c'est à dire à changement de code après chaque usage, sont facilement copiables et explorables.

En effet, pour les codes mobiles, la connaissance de l'opérateur permettant de passer du message Mn au message Mn + 1, qui est tenu secret par le fabricant, est vite obtenue en cas de production en grande série, ce qui rend illusoire la sécurité procurée par ces systèmes.

De plus, leur désynchronisation inévitable réduit énormément le nombre de combinaisons possibles.

Les codes mobiles à changement de code de temps en temps sont copiables et reproductibles pendant une certain temps et sont d'autant plus explorables que la période entre deux changements de code est longue.

Le but de l'invention est donc de résoudre ces problèmes en proposant un procédé et un dispositif de génération et de validation d'un message numérique d'identification d'une station d'émission qui permette d'identifier une station d'émission de ce message, par exemple parmi un certain nombre de stations possibles, et qui ne soit pas susceptible de copie, de reproduction, d'exploration ou même de détermination par connaissance de plusieurs messages et de l'opérateur.

A cet effet, l'invention a pour objet un procédé de génération et de validation d'un message numérique d'identification d'au moins une station d'émission de ce message vers une station de réception de celui-ci, caractérisé en ce que, ces stations d'émission et de réception comportant des horloges synchrones, on affecte à ces stations un nombre N quelconque, en ce que le message codé est obtenu dans la station d'émission, en :

a) calculant un premier temps Tie à partir du temps écoulé depuis l'initialisation de l'horloge de cette station d'émission, éventuellement en tenant compte du temps écoulé entre l'initialisation de cette horloge et celle de l'horloge de la station de réception, si ces initialisations n'ont pas été simultanées,

b) calculant un premier code Ae1 à partir de N et de Tie suivant une première relation,

c) calculant un second code Ae2 à partir du premier code Ae1 suivant une seconde relation,

d) calculant le message codé M à partir de N, Tie et Ae2, suivant une troisième relation, et en ce que l'opération de validation est réalisée, dans la station de réception, en :

e) calculant un second temps Tir1 à partir du temps écoulé depuis l'initialisation de l'horloge de la station de réception, éventuellement en tenant compte du temps écoulé entre l'initialisation de cette horloge et celle de l'horloge de la station d'émission, si ces initialisations n'ont pas été simultanées et dans le cas où on n'a pas tenu compte de ce temps pour le calcul de Tie,

f) calculant un troisième code Ar1 à partir du message codé reçu M, de N et de Tir1, en utilisant la troisième relation,

g) calculant un quatrième code Ar2 à partir des n bits de poids fort du code Ar1, non affectés par la dérive des horloges des stations d'émission et de réception, n étant le nombre de bits du premier code Ae1,

h) calculant un cinquième code Ar3 à partir du quatrième code Ar2 suivant la seconde relation,

i) calculant un troisième temps Tir2 à partir du message codé reçu M, de N et de Ar3, en utilisent la troisième relation,

j) calculant un sixième code Ar4 à partir de N et de Tir2 en utilisant la première relation, et

k) en vérifiant que le code Ar2 est égal au code Ar4 et que la valeur absolue de la différence Tir2 - Tir1 est inférieure à un seuil déterminé, pour valider l'identification.

Selon un autre aspect, l'invention a également pour objet un dispositif de génération et de validation d'un message numérique M d'identification d'au moins une station d'émission de ce message vers une station de réception de celui-ci pour la mise en oeuvre du procédé tel que décrit précédemment, caractérisé en ce que les stations d'émission et de réception comportent chacune un calculateur relié à une mémoire de stockage du ou de chaque nombre N affecté et à une horloge et en ce qu'il comporte un organe de déclenchement de l'émission d'un message numérique d'identification de la station d'émission et des moyens d'émission de ce message en direction de la station de réception.

Selon un autre aspect, l'invention a également pour objet une application du dispositif tel que décrit précédemment, à la commande du verrouillage et du déverrouillage d'au moins une serrure de porte de véhicule automobile, dans laquelle la station d'émission est autonome et la station de réception est disposée dans le véhicule, la validation du message d'identification déclenchant la commande du verrouillage ou du déverrouillage de la serrure.

L'invention sera mieux comprise à l'aide de la description qui va suivre, donnée uniquement à titre d'exemple et faite en se référant aux dessins annexés, sur lesquels :

- la Fig.1 représente un schéma synoptique d'un mode de réalisation d'une station d'émission entrant dans la constitution d'un dispositif de génération et de validation selon l'invention;
- la Fig.2 représente un schéma synoptique d'un premier mode de réalisation d'une station de réception entrant dans la constitution d'un dispositif selon l'invention; et
- la Fig.3 représente un schéma synoptique d'un second mode de réalisation d'une station de réception entrant dans la constitution d'un dispositif selon l'invention.

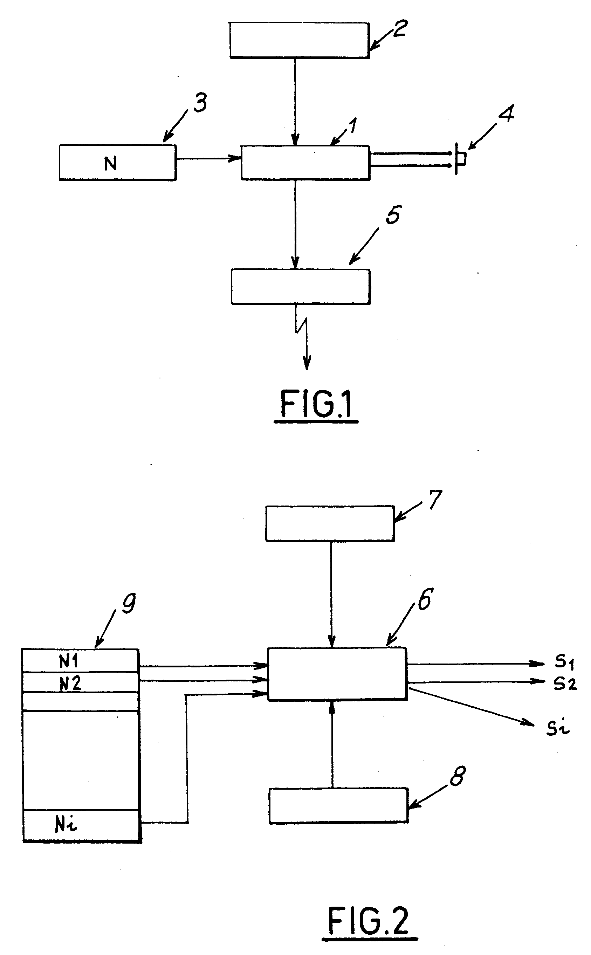

Ainsi qu'on peut le voir sur la Fig.1, une station d'émission, entrant dans la constitution d'un dispositif selon l'invention, comporte un calculateur 1 relié à une horloge 2 et à une mémoire 3 de stockage d'un nombre N quelconque affecté à cette station d'émission.

Ce calculateur est également relié à un organe 4 de déclenchement de l'émission d'un message numérique d'identification de cette station, cet organe étant constitué par exemple par un bouton poussoir, et à des moyens d'émission 5 de ce message en direction d'une station de réception.

La génération du message numérique d'identification de cette station d'émission est obtenue par les différentes étapes du procédé décrit ci-dessous.

Dans un premier temps, le calculateur 1 calcule un premier temps Tie à partir du temps écoulé depuis l'initialisation de l'horloge de cette station d'émission.

Eventuellement et comme cela sera décrit plus en détail par la suite, lors de ce calcul, le calculateur peut tenir compte du temps écoulé entre l'initialisation de cette horloge de la station d'émission et celle de l'horloge d'une station de réception associée, si ces initialisations n'ont pas été simultanées.

Après le calcul de ce premier temps Tie, le calculateur 1 calcule un premier code Ae1 à partir de N et de Tie suivant une première relation.

A titre d'exemple, ce premier code Ae1 peut être calculé à partir du nombre N quelconque affecté à cette station d'émission et du temps Tie, donnés ci-dessous en numèrique, par une opération réversible, l'écriture étant décimale.

$$N = n1\ n2\ n3\ n4\ n5\ n6$$
$$Tie = t1\ t2\ t3\ t4\ t5\ t6\ t7\ t8$$
$$Ae1 = |\Sigma ni - \Sigma ti|\ (t7\ t8\ + 1)$$

Le code Ae1 se présente alors sous la forme d'un nombre exceptionnellement nul à quatre chiffres et à variation rapide et erratique, représenté par :

$$Ae1 = a1\ a2\ a3\ a4$$

A partir de ce code Ae1 et suivant une seconde relation, le calculateur calcule un second code Ae2 en mettant par exemple bout à bout deux fois le code Ae1, comme indiqué ci-dessous :

$$Ae2 = a1\ a2\ a3\ a4\ a1\ a2\ a3\ a4$$

Après ces différents calculs, le calculateur calcule un message codé M à partir de N, de Tie et de Ae1 suivant une troisième relation qui peut par exemple être une addition des différents éléments mentionnés précédemment.

Dans ce cas, cette opération se présente de la façon suivante :

$$N \quad = \qquad\qquad n1 \; n2 \; n3 \; n4 \; n5 \; n6$$
$$Tie \; = \; {}^{+} \; t1 \; t2 \; t3 \; t4 \; t5 \; t6 \; t7 \; t8$$
$$Ae2 \; = \; {}^{+} \; a1 \; a2 \; a3 \; a4 \; a1 \; a2 \; a3 \; a4$$
$$\rule{6cm}{0.4pt}$$
$$M \quad = \qquad m1 \; m2 \; m3 \; m4 \; m5 \; m6 \; m7 \; m8$$

Ce message est alors transmis par le calculateur 1 aux moyens d'émission 5 de cette station d'émission, ceux-ci se chargeant de transmettre ce message sous une forme quelconque vers des moyens de réception d'une station de réception dont le schéma synoptique d'un mode de réalisation est donné sur la Fig.2.

Sur cette figure 2, on peut constater que la station de réception comporte un calculateur 6 relié à des moyens 7 de réception du message codé, à une horloge 8 et à des moyens de stockage 9 du nombre N affecté à la station d'émission.

Bien entendu, les horloges des stations d'émission et de réception sont au moins à peu près synchrones. Plusieurs stations d'émission peuvent être associées à cette station de réception, ces stations d'émission étant alors affectées de nombres d'identification N différent également introduits dans les moyens de mémorisation 9 de la station de réception, pour permettre la validation d'un message provenant de l'une ou l'autre de ces stations.

Dans l'exemple de réalisation décrit en regard de cette figure 2, on considère que les horloges des stations d'émission et de réception sont initialisées au même instant.

Dans ce cas, le calculateur 6 calcule un second temps Tir1 à partir du temps écoulé depuis l'initialisation de l'horloge de cette station de réception.

A la suite de ce calcul de Tir1, le calculateur calcule un troisième code Ar1 à partir du message codé reçu M, d'un nombre N choisi dans la mémoire 9 et du temps Tir1, en utilisant la troisième relation décrite précédemment.

Cette opération peut alors s'écrire dans l'exemple décrit :

$$M \quad = \qquad m1 \; m2 \; m3 \; m4 \; m5 \; m6 \; m7 \; m8$$
$$N \quad = \; {}^{-} \qquad\qquad n1 \; n2 \; n3 \; n4 \; n5 \; n6$$
$$Tir1 = \; {}^{-} \; t1 \; t2 \; t3 \; t4 \; t5 \; t6 \; t7 \; t8$$
$$\rule{6cm}{0.4pt}$$
$$Ar1 \; = \qquad a1 \; a2 \; a3 \; a4 \; a5 \; a6 \; a7 \; a8$$

La troisième relation qui était pour la génération du message d'identification M, une addition des termes N, Tie et Ae2 devient maintenant une soustraction à partir de M, de l'un des nombres N prélevé dans la mémoire 9 est de Tir1 obtenu à partir de l'horloge 8 de la station de réception.

Le message obtenu Ar1 comporte huit chiffres a1 à a8 respectivement. Le calculateur 6 de la station de réception calcule alors un quatrième code Ar2 à partir des n bits de poids fort du code Ar1, n étant le nombre de bits du premier code Ae1 mentionné précédemment. Les n bits de poids fort du code Ar1 ne sont pas affectés par la dérive possible des horloges des stations d'émission et de réception, ce qui permet d'obtenir un code équivalent au code Ae1 décrit précédemment.

Ce code Ar2 reprend alors par exemple les quatre premiers bits a1 à a4 du code Ar1, à partir desquels le calculateur 6 calcule un cinquième code Ar3 suivant la seconde relation mentionnée précédemment, c'est à dire par exemple en reproduisant bout à bout deux fois ce code Ar2. Le code Ar3 se présente alors de la façon suivante :

Ar2 = a1 a2 a3 a4
Ar3 = a1 a2 a3 a4 a1 a2 a3 a4

A la suite de cette opération, le calculateur 6 de la station de réception calcule un troisième temps Tir2 à partir du message codé reçu M, du nombre N sélectionné et de Ar3 en utilisant la troisième relation.

Ceci se présente alors de la façon suivante :

$$
\begin{array}{llllllllll}
M & = & m1 & m2 & m3 & m4 & m5 & m6 & m7 & m8 \\
N & = & & & n1 & n2 & n3 & n4 & n5 & n6 \\
Ar3 & = & a1 & a2 & a3 & a4 & a1 & a2 & a3 & a4 \\
\hline
\\
Tir2 & = & t1 & t2 & t3 & t4 & t5 & t6 & t7 & t8
\end{array}
$$

Le calculateur peut alors calculer un sixième code Ar4 à partir de N et de Tir2 en utilisant la première relation mentionnée précédemment, comme suit :

$$Ar4 = |\Sigma ni - \Sigma ti| \, (t7 \, t8 + 1)$$

Pour valider l'identification, le calculateur vérifie alors que le code Ar2 est égal au code Ar4 et que la valeur absolue de la différence Tir2 - Tir1 est inférieure à un seuil déterminé, ce seuil pouvant être lié, comme cela sera décrit plus en détail par la suite, à une dérive réaliste des horloges.

Bien entendu, en cas de défaut de correspondance entre les codes pour le nombre N sélectionné, le calculateur effectue une tentative de validation pour chaque nombre N.

On conçoit donc que le calculateur de la station de réception effectue un calcul d'un premier code à partir des informations du message codé, d'un nombre N en mémoire et du temps écoulé depuis l'initialisation de sa propre horloge.

Il effectue ensuite un second calcul pour déterminer par une autre voie, et à partir d'informations tirées des informations mentionnées précédemment pour le premier calcul, un second code qui est comparé au premier pour valider le message en cas de correspondance.

La station de réception peut également être dotée de moyens de stockage pour la ou chaque station d'émission associée, du temps Tir2 calculé lors du message précédent reçu de cette station. Lors de la validation du message suivant, le calculateur compare le temps Tir2 calculé à partir des informations contenues dans le message reçu, au temps Tir2 stocké en mémoire, c'est à dire au temps Tir2 calculé à partir du message précédent, pour ne valider l'identification que si le temps Tir2 calculé à partir des informations contenues dans le message reçu, est supérieur au temps Tir2 stocké et correspondant au temps calculè à partir du message précédent.

Ces deux temps peuvent également être utilisés pour calculer le seuil déterminé mentionné précédemment, par exemple suivant la relation Tir2 calculé - Tir2 stocké / 100 000.

On a mentionné précédemment que dans l'exemple décrit, les horloges des stations d'émission et de réception sont initialisées simultanément.

Il va de soi que ces initialisations peuvent également être décalées dans le temps et qu'il y a alors lieu de tenir compte de ce décalage pour les différents calculs.

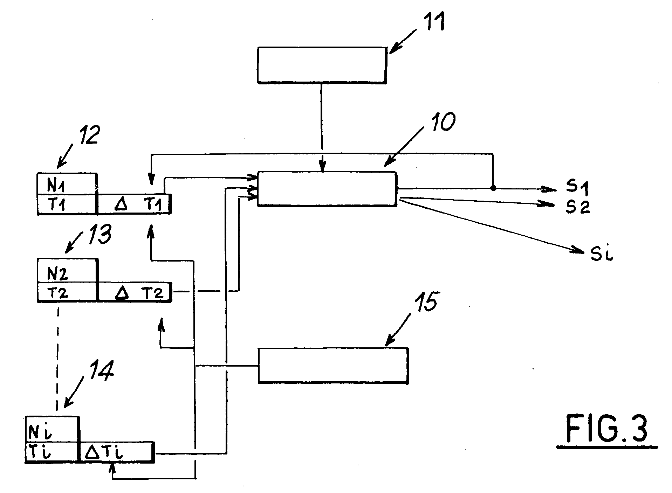

Sur la Fig.3, on a représenté un mode de réalisation d'une station de réception adaptée pour tenir compte de ce décalage.

Cette station de réception comporte toujours un calculateur 10 relié à des moyens de réception du message codé 11.

Ce calculateur 10 est également relié à une série de moyens de mémorisation, par exemple 12, 13 et 14 affectés par exemple à différentes stations d'émission et mémorisant pour chaque station, un nombre N affecté à cette station, le dernier Tir2 calculé pour cette station et un écart $\Delta T$ représentant le temps écoulé depuis la réception du dernier message de cette station d'émission.

Une horloge 15 permet de réactualiser ces compteurs d'écart $\Delta T$.

En variante, cette station de réception peut être dotée de moyens de stockage du temps écoulé entre l'initialisation des stations d'émission associées et la station de réception pour fournir une référence de décalage pour les différents calculs.

Dans tous les cas, lors des différents calculs, le calculateur de la station de réception tient compte de ce décalage entre les initialisations des horloges des stations d'émission et de réception, s'il existe, pour calculer des temps de manière cohérente et valider correctement le message.

Il va de soi également que ce décalage entre l'initialisation de l'horloge de la station d'émission ou des stations d'émission associées et celle de l'horloge de la station de réception, peut être pris en compte au niveau du calcul du premier temps Tie par le calculateur de la station d'émission et que celui-ci peut alors être relié à des moyens de mémorisation de ce décalage.

Dans les deux modes de réalisation de la station de réception représentés sur les Fig.2 et 3, les sorties S1 à Si du calculateur sont utilisées pour assurer différentes commandes par exemple d'organes mécaniques ou autres à la suite de la validation du message. C'est ainsi par exemple que le dispositif représenté sur ces figures peut être utilisé pour la commande du verrouillage et du déverrouillage d'au moins une serrure de porte de véhicule automobile, dans laquelle la ou chaque station d'émission est autonome et la station de réception est disposée dans le véhicule, la validation du message d'identification déclenchant la commande du verrouillage ou du déverrouillage de la serrure.

Bien entendu, d'autres utilisations peuvent être envisagées, comme par exemple, l'accès d'un terminal d'interrogation à une base de données, etc.

## Revendications

1. Procédé de génération et de validation d'un message numèrique M d'identification d'au moins une station d'émission de ce message vers une station de réception de celui-ci, caractérisé en ce que ces stations d'émission et de réception comportant des horloges (2,8; 15) synchrones, on affecte à ces stations un nombre N quelconque, en ce que le message codé est obtenu, dans la station d'émission, en :

   a) calculant un premier temps Tie à partir du temps écoulé depuis l'initialisation de l'horloge de cette station d'émission, éventuellement en tenant compte du temps écoulé entre l'initialisation de cette horloge et celle de l'horloge de la station de réception, si ces initialisations n'ont pas été simultanées,

   b) calculant un premier code Ae1 à partir de N et de Tie suivant une première relation,

   c) calculant un second code Ae2 à partir du premier code Ae1 suivant une seconde relation,

   d) calculant le message codé M à partir de N, Tie et Ae2, suivant une troisième relation, et en ce que l'opération de validation est réalisée, dans la station de réception, en :

   e) calculant un second temps Tir1 à partir du temps écoulé depuis l'initialisation de l'horloge de la station de réception, éventuellement en tenant compte du temps écoulé entre l'initialisation de cette horloge et celle de l'horloge de la station d'émission, si ces initialisations n'ont pas été simultanées et dans le cas où on n'a pas tenu compte de ce temps pour le calcul de Tie,

   f) calculant un troisième code Ar1 à partir du message codé reçu M, de N et de Tir1, en utilisant la troisième relation,

   g) calculant un quatrième code Ar2 à partir des n bits de poids fort du code Ar1, non affectés par la dérive des horloges des stations d'émission et de réception, n étant le nombre de bits du premier code Ae1,

   h) calculant un cinquième code Ar3 à partir du quatrième code Ar2 suivant la seconde relation,

   i) calculant un troisième temps Tir2 à partir du message codé reçu M, de N et de Ar3, en utilisant la troisième relation,

   j) calculant un sixième code Ar4 à partir de N et de Tir2 en utilisant la première relation, et

   k) en vérifiant que le code Ar2 est égal au code Ar4 et que la valeur absolue de la différence Tir2 - Tir1 est inférieure à un seuil déterminé, pour valider l'identification.

2. Procédé selon la revendication 1, caractérisé en ce que plusieurs stations d'émission étant associées à une station de réception, on affecte à chaque station d'émission un nombre N différent, et ces différents nombres, à la station de réception, et en ce qu'on effectue une tentative de validation d'un message reçu pour chaque nombre N affecté.

3. Procédé selon la revendication 1 ou 2, caractérisé en ce que la station de réception stocke pour la ou chaque station d'émission, le dernier temps Tir2 calculé.

4. Procédé selon la revendication 3, caractérisé en ce que lors de la validation, on compare le temps Tir2 calculé à partir des données contenues dans le message reçu au temps Tir2 stocké et correspondant à celui calculé à partir du message précèdent et en ce qu'on valide l'identification si le temps Tir2 calculé est supérieur au temps Tir2 stocké.

5. Procédé selon la revendication 4, caractérisé en ce que le seuil déterminé est égal à Tir2 calculé - Tir2 stocké / 100 000.

6. Dispositif de génération et de validation d'un message numérique M d'identification d'au moins une station d'émission de ce message vers une station de réception de celui-ci pour la mise en oeuvre du procédé selon l'une quelconque des revendications 1 à 5, caractérisé en ce que les stations d'émission et de réception comportent chacune un calculateur (1,6; 10) relié à une mémoire (3,9; 12,13,14) de stockage du ou de chaque nombre N affecté et à une horloge (2,8; 15) et en ce qu'il comporte un organe (4) de déclenchement de l'émission d'un message numérique d'identification de la station d'émission et des moyens (5) d'émission de ce message en direction de la station de réception.

7. Dispositif selon la revendication 6, caractérisé en ce que la ou chaque station d'émission ou la station de réception comporte des moyens de stockage du temps écoulé entre l'initialisation de l'horloge de la ou chaque station d'émission et celle de l'horloge de la station de réception.

8. Dispositif selon la revendication 6, caractérisé en ce que la station de réception comporte des moyens (12,13,14) de stockage du dernier temps Tir2 calculé pour la ou chaque station d'émission et des moyens de comptage et de stockage du temps écoulé depuis la réception du dernier message de la station d'émission correspondante.

9. Application du dispositif selon l'une quelconque des revendications 6 à 8, à la commande du verrouillage et du déverrouillage d'au moins une serrure de porte de véhicule automobile, dans laquelle la station d'émission est autonome et la station de réception est disposée dans le véhicule, la validation du message d'identification déclenchant la commande du verrouillage ou du déverrouillage de la serrure.

**Claims**

1. Method for generating and validating a numerical message M for identifying at least one station transmitting this message to a station receiving it, characterised in that these transmitting and receiving stations have synchronous clocks (2, 8; 15), any number N is allocated to these stations, in that the coded message is obtained, in the transmitting station, by:
   a) computing a first time Tie from the elapsed since the initialisation of the clock in this transmitting station, if necessary taking account of the time elapsed between the initialisation of this clock and the initialisation of the clock in the receiving station, if these initialisations were not simultaneous,
   b) computing a first code Ae1 from N and from Tie in accordance with a first equation,
   c) computing a second code Ae2 from the first code Ae1 in accordance with a second equation,
   d) computing the coded message M from N, Tie and Ae2, in accordance with a third equation, and in that the validation operation is performed, in the receiving station, by:
   e) computing a second time Tir1 from the time elapsed since the initialisation of the clock in the receiving station, if necessary taking account of the time elapsed between the initialisation of this clock end the initialisation of the clock in the transmitting station, if these initialisations were not simultaneous and where account has not been taken of this time for the computation of Tie,
   f) computing a third code Ar1 from the coded message received M, from N and from Tir1, using the third equation,
   g) computing a fourth code Ar2 from the n most significant bits of the code Ar1, not affected by the deviation between the clocks in the transmitting and receiving stations, n being the number of bits in the first code Ae1,
   h) computing a fifth code Ar3 from the fourth code Ar2 in accordance with the second equation,
   i) computing a third time Tir2 from the coded message received M, from N and from Ar3, using the third equation,
   j) computing a sixth code Ar4 from N and Tir2, using the first equation, and

k) verifying that the code Ar2 is equal to the code Ar4 and that the absolute value of the difference Tir2 - Tir1 is less than a predetermined threshold, in order to validate the identification.

2. Method according to Claim 1, characterised in that, several transmitting stations being associated with a receiving station, a different number N is allocated to each transmitting station, and these different numbers to the receiving station, and in that an attempt is made to validate a message received for each number N allocated.

3. Method according to claim 1 or 2, characterised in that the receiving station stores, for the transmitting station or stations, the last time Tir2 calculated.

4. Method according to Claim 3, characterised in that, at the time of validation, the time Tir2 calculated from the data contained in the message received is compared with the time Tir2 stored and corresponding to the one calculated from the previous message, and in that the identification is validated if the calculated time Tir2 is greater than the stored time Tir2.

5. Method according to Claim 4, characterised in that the predetermined threshold is equal to calculated Tir2 - stored Tir2 / 100,000.

6. Device for generating and validating a numerical message M for identifying at least one station transmitting this message to a station receiving it, for implementing the method according to any one of Claims 1 to 5, characterised in that the transmitting and receiving stations each have a computer (1, 6; 10) connected to a memory (3, 9; 12, 13, 14) for storing the allocated number or numbers N and to a clock (2, 8; 15), and in that it has a unit (4) for triggering the transmission of a numerical message for identifying the transmitting station and means (5) for transmitting this message in the direction of the receiving station.

7. Device according to Claim 6, characterised in that transmitting station or stations or the receiving station have means for storing the time elapsed between the initialisation of the clock in the transmitting station or stations and the initialisation of the clock in the receiving station.

8. Device according to Claim 6, characterised in that the receiving station has means (12, 13, 14) for storing the last time Tir2 calculated for the transmitting station or stations and means for counting and storing the time elapsed since the reception of the last message from the corresponding transmitting station.

9. Application of the device according to any one of Claims 6 to 8 to the control of the locking and unlocking of at least one door lock on a motor vehicle, in which the transmitting station is autonomous and the receiving station is disposed in the vehicle, the validation of the identification message triggering the command for locking or unlocking the lock.

**Patentansprüche**

1. Verfahren zum Erzeugen und Quittieren einer numerischen Meldung M zur Identifikation mindestens einer Station zum Aussenden dieser Meldung an eine Station zum Empfang derselben, **dadurch gekennzeichnet**, daß die Sende- und Empfangsstationen Synchronuhren (2,8; 15) umfassen und man diesen Stationen eine beliebige Zahl N zuteilt,
daß man die codierte Meldung in der Sendestation erhält, indem man;
a) eine erste Zeit $T_{ie}$ aus der seit dem Initialisieren der Uhr dieser Sendestation abgelaufenen Zeit errechnet, eventuell unter Berücksichtigung der zwischen dem Initialisieren dieser und der Uhr der Empfangsstation abgelaufenen Zeit, sofern das Initialisieren nicht gleichzeitig erfolgte,
b) einen ersten Code $A_{e1}$ aus N und $T_{ie}$ nach einer ersten Beziehung errechnet,
c) einen zweiten Code $A_{e2}$ aus dem ersten Code $A_{e1}$ nach einer zweiten Beziehung errechnet,
d) die codierte Meldung M aus N, $T_{ie}$ und $A_{e2}$ nach einer dritten Beziehung errechnet, und
daß der Vorgang des Quittierens in der Empfangsstation erfolgt, in dem man:
e) eine zweite Zeit $T_{ir1}$ aus der seit dem Initialisieren der Uhr der Empfangsstation abgelaufenen Zeit errechnet, eventuell unter Berücksichtigung der zwischen dem Initialisieren dieser und der Uhr der Empfangsstation abgelaufenen Zeit, sofern das Initialisieren nicht gleichzeitig erfolgte und man diese Zeit beim Errechnen von $T_{ie}$ nicht berücksichtigt hat,

f) einen dritten Code $A_{r1}$ aus der empfangenen codierten Meldung M, aus N sowie $T_{ir1}$ unter Verwendung einer dritten Beziehung errechnet,

g) einen vierten Code $A_{r2}$ aus der Anzahl n der *hochgewichtigen* Bits des Codes $A_{r1}$ errechnet, welche von der Abweichung der Uhren der Sende- und Empfangsstation nicht beeinträchtigt werden, wobei n die Anzahl der Bits des ersten Codes $A_{e1}$ darstellt,

h) einen fünften Code $A_{r3}$ aus dem vierten Code $A_{r2}$ nach der zweiten Beziehung errechnet,

i) eine dritte Zeit $T_{ir2}$ aus der empfangenen codierten Meldung M, aus N sowie $A_{r3}$, bei Anwendung der dritten Beziehung errechnet,

j) einen sechsten Code $A_{r4}$ aus N und $T_{ir2}$ bei Anwendung der ersten Beziehung errechnet und

k) nachprüft, daß Code $A_{r2}$ gleich Code $A_{r4}$ ist und der Absolutwert der Differenz $T_{ir2}$ - $T_{ir1}$ unter einem definierten Schwellenwert liegt, um die Identifikation zu Quittieren.

2. Verfahren nach Anspruch 1, **dadurch gekennzeichnet**, daß mehrere Sendestationen mit einer Empfangsstation verbunden sind und man jeder Sendestation eine unterschiedliche Zahl N und diese verschiedenen Zahlen der Empfangsstation zuteilt, und daß für jede zugeteilte Zahl N ein Versuch zum Quittieren einer empfangenen Meldung durchgeführt wird.

3. Verfahren nach Anspruch 1 oder 2, **dadurch gekennzeichnet**, daß die Empfangsstation für die bzw. jede Sendestation die letzte errechnete Zeit $T_{ir2}$ speichert.

4. Verfahren nach Anspruch 3, **dadurch gekennzeichnet**, daß beim Quittieren die aus den in der empfangenen Meldung enthaltenen Angaben errechnete Zeit $T_{ir2}$ mit der gespeicherten Zeit $T_{ir2}$, die der aus der vorhergehenden Meldung errechneten entspricht, verglichen wird, und daß die Identifikation quittiert wird, sofern die errechnete Zeit $T_{ir2}$ größer ist als die gespeicherte Zeit $T_{ir2}$.

5. Verfahren nach Anspruch 4, **dadurch gekennzeichnet**, daß der definierte Schwellenwert gleich $T_{ir2}$ errechnet - $T_{ir2}$ gespeichert / 100.000 ist.

6. Vorrichtung zum Erzeugen und Quittieren einer numerischen Meldung M zur Identifikation mindestens einer Station zum Aussenden dieser Meldung an eine Station zum Empfang derselben zwecks Anwendung des Verfahrens nach einem beliebigen der Ansprüche 1 bis 5, **dadurch gekennzeichnet**, daß die Sende- und Empfangsstationen jeweils einen Rechner (1,6; 10) umfassen, welcher mit einem Speicher (3,9; 12,13,14) zum speichern der bzw. jeder zugeteilten Zahl N sowie mit einer Uhr (2,8; 15) verbunden ist, und daß sie ein Organ (4) zur Auslösung der Aussendung einer numerischen Meldung zur Identifikation der Sendestation sowie Mittel (5) zur Aussendung dieser Meldung an die Empfangsstation umfaßt.

7. Vorrichtung gemäß Anspruch 6, **dadurch gekennzeichnet**, daß die bzw. jede Sendestation oder die Empfangsstation Mittel zur Speicherung der zwischen dem Initialisieren der Uhr der bzw. jeder Sendestation und derjenigen der Empfangsstation abgelaufenen Zeit umfaßt.

8. Vorrichtung gemäß Anspruch 6, **dadurch gekennzeichnet**, daß die Empfangsstation Mittel (12,13,14) zur Speicherung der letzten für die bzw. jede Sendestation errechneten Zeit $T_{ir2}$ sowie Mittel zur Zählung und Speicherung der seit dem Empfang der letzten Meldung der entsprechenden Sendestation abgelaufenen Zeit umfaßt.

9. Anwendung der Vorrichtung gemäß einem beliebigen der Ansprüche 6 bis 8 bei der Steuerung des Ver- bzw. Entriegelns mindestens eines Türschlosses eines Kraftfahrzeuges, bei der die Sendestation autonom und die Empfangsstation im Fahrzeug untergebracht ist und das Quittieren der Meldung zur Identifikation die Steuerung des Ver- bzw. Entriegelns des Schlosses auslöst.

## FIG.1

## FIG.2

EP 0 419 306 B1

FIG.3